# EUROPEAN PATENT APPLICATION

(11) **EP 3 806 124 A1**
(43) Date of publication of application: **14.04.2021**
(21) Application number: 19814173.1
(22) Date of filing: 29.05.2019
(51) Int. Cl.: H01H 27/00, F16P 3/10

(54) **ACTUATOR UNIT AND SAFETY SWITCH**

(30) Priority: 08.06.2018 JP 2018110715
(71) Applicant: Idec Corporation, Osaka-shi, Osaka 532-0004 (JP)
(72) Inventor: YAMANO, Masatake, Osaka-shi, Osaka 532-0004 (JP); ISA, Yasuo, Osaka-shi, Osaka 532-0004 (JP)
(74) Representative: Whitlock, Holly Elizabeth Ann
(86) International application number: PCT/JP2019/021436
(87) International publication number: WO 2019/235339

(57) **Abstract**

In an actuator unit, a slide base can be not only locked easily relative to a fixed base but also made a secure locking state in which the slide base cannot move relative to the fixed base by an operation from the outside. The actuator unit (2) includes a fixed base (2A) to be fixed at a movable door (D), a slide base (2B) having an actuator (20) and provided slidable at the fixed base (2A) , a first locking means (26C₁, 27) that locks the slide base (2B) in a first locking state relative to the fixed base (2A) in a retreat position of the actuator (20), an unlocking means (26A, 26B, 26C) that can unlock the first locking state, and a lock or a second locking means (22) that causes the slide base (2B) to be unable to move relative to the fixed base (2A) by an operation of a key (22a).

## Description

### TECHNICAL FIELD

The present invention relates generally to an actuator unit that changes an output state of a switch, and more particularly, to an improvement of the structure of the actuator unit.

### BACKGROUND ART

At a doorway of a hazardous area where industrial machines such as machine tools, industrial robots, and the like are installed, there is provided a safety switch that turns on/off according to an opening/closing state of a door.

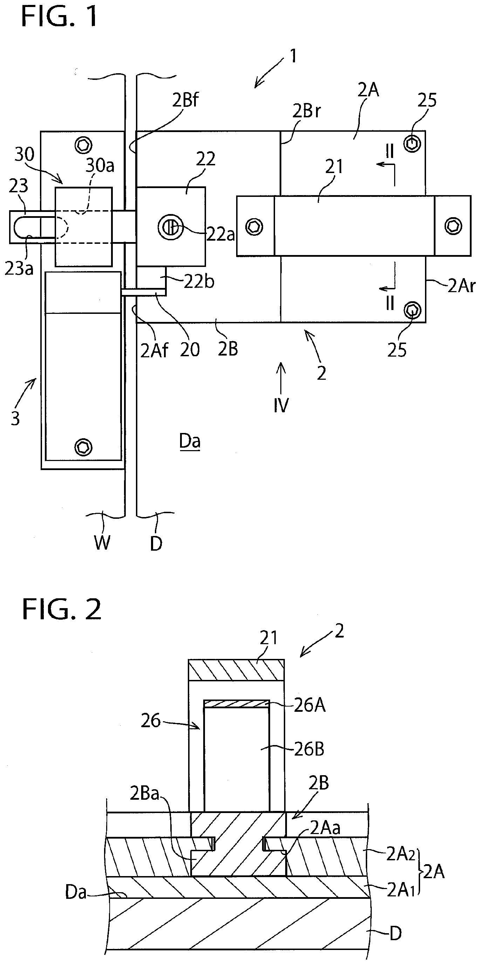

For example, Japanese patent application publication No. 2007-227158 (hereinafter referred to as JP '158) describes a safety switch (10) in figures 2 to 4. The safety switch (10) comprises a door switch unit (11) provided on a post (P) at a doorway and having a slide key mechanism (K) and a door switch (20) with an operation part (22), and a slider unit (12) with a slider (26) that includes a slider fitting part (37) slidably supported by a slide base (25) at an openable/closable door (D) and insertable into the slide key mechanism (K) and an actuator (33) insertable into the operation part (22) (see paras. [0051] and [0052]).

The slide key mechanism (K) includes a lock (16), which holds a slide lock (17) rotatably that blocks an insertion of the slider fitting part (37) into the slide key mechanism (K) . An insertion of a key (18) into the lock (16) and a rotation of the key (18) cause a slide lock (17) to rotate. Thereby, an interfering protrusion (17A) at a lower end of the slide lock (17) can take a blocking position where an insertion of the slider fitting part (37) into the slide key mechanism (K) is blocked and an allowing position where an insertion of the slider fitting part (37) into the slide key mechanism (K) is allowed (see paras. [0053], and figures 2, 5, 8-11).

In the safety switch (10) described in JP '158, when an operator closes the openable/closable door (D) during operation of a working robot (R), he/she inserts the key (18) into the lock (16) to rotate the slide lock (17), such that thereby the interfering protrusion (17A) of the slide lock (17) is moved to the allowing position where an insertion of the slider fitting part (37) into the slide key mechanism (K) is allowed. From this state, when the operator grips a handle (30) to move the openable/closable door (D) in a closing direction, the slider fitting part (37) is inserted into the slide key mechanism (K) and the actuator (33) is inserted into the operation part (22) . Then, a contact inside the door switch (20) is changed and the working robot (R) in the working area (S) thus becomes operatable (see paras. [0064] - [0066], and figures 1, 3, 4, 11).

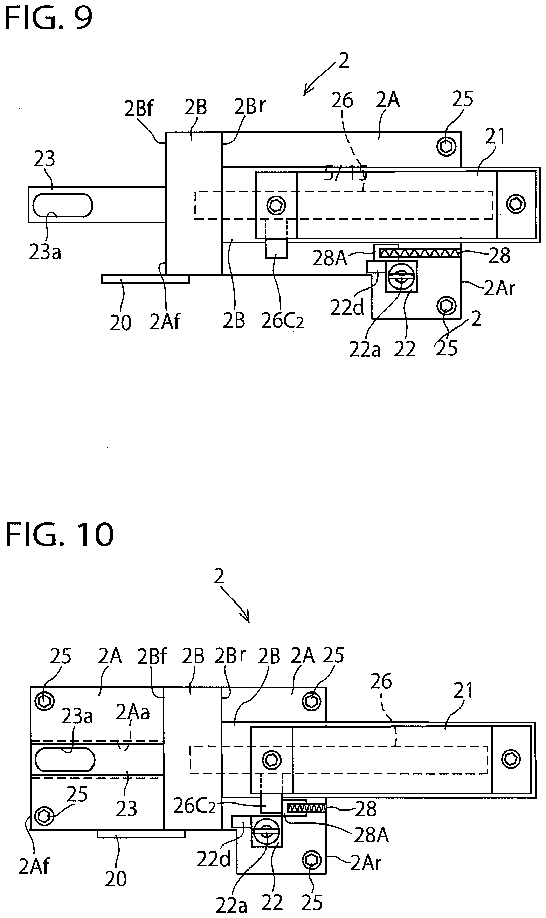

Also, in opening the openable/closable door (D) during maintenance of the working robot (R), the operator cuts off a power supply to the working robot (R) and then he/she grips the handle (30) to move the openable/closable door (D) in an opening direction. Thereby, the slider fitting part (37) is drawn out of the slide mechanism (K) and the actuator (33) is pulled out of the operation part (22) . From this state, the operator inserts the key (18) into the lock (16) to rotate the slide lock (17), such that thereby the interfering protrusion (17A) of the slide lock (17) is transferred to the blocking position where an insertion of the slider fitting part (37) into the slide key mechanism (K) is blocked. In such a state, even if the operator tries to close the openable/closable door (D), since the slider fitting part (37) interferes with the interfering protrusion (17A) of the slide lock (17) disposed inside the slide key mechanism (K), the slider fitting part (37) is blocked from being inserted into the slide key mechanism (K) (see paras. [0068] - [0069], and figure 9) .

Therefore, even in the event that the openable/closable door (D) is erroneously closed with an operator left behind in the working area (S) during opening of the openable/closable door (D), since the slide key fitting part (37) cannot be inserted into the slide key mechanism (K), the actuator (33) is not inserted into the operation part (22) . As a result, a contact inside the door switch (20) does not changed over, thus preventing the working robot (R) from becoming an operatable state (see para. [0070]).

### PRIOR ART REFERENCES

### Patent Documents

Japanese Patent Application Publication No. 2007-227158 (see paras. [0051] - [0053], [0064] - [0066] and [0068] - [0070], and Figures 2-5, 8-11).

### SUMMARY OF THE INVENTION

### Objects to be Achieved by the Invention

However, in the prior-art safety switch, when the openable/closable door (D) is open, the slider (26) is slidable relative to the slide base (25). Therefore, with the interfering protrusion (17A) of the slide lock (17) disposed at the blocking position where an insertion of the slider fitting part (37) into the slide key mechanism (K) is blocked, when the openable/closable door (D) is closed due to carelessness of an operator, or influence of the wind from the outside or the like, alternatively, by a human body such as an operator hitting against the handle (30), the slider (26) slide-moves. Thereby, the slider fitting part (37) bumps against the interfering protrusion (17A) inside the slide key mechanism (K) (in some cases, the actuator (33) interferes with the operation part (22)), and as a result, there is a risk that parts of the safety switch are impaired or damaged. In this case, a human body of an operator, etc. may also be in danger because the slider fitting part (37) and the actuator (33) in moving may hit against the human body.

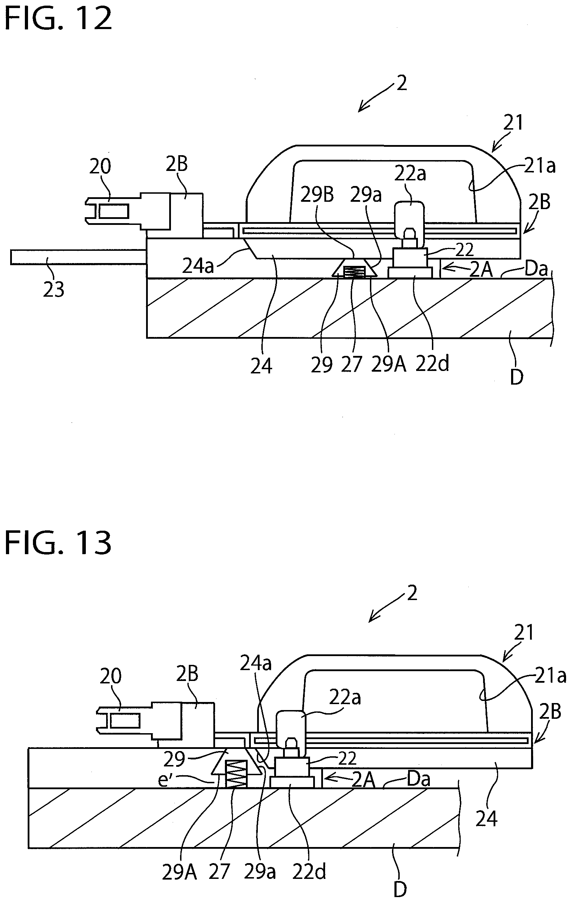

On the other hand, in the safety switch (10) described in figures 12 to 26 of JP '158, when the openable/closable door (D) is open, the operator operates a lock lever (40, 50) by the key (18) to lock the slider (26) at the slide base (25) . In this case, because the slider (26) can be locked so as not to slide relative to the slide base (25) in the opening state of the openable/closable door (D), even in the event that the openable/closable door (D) closes due to carelessness of the operator, the actuator (33) can be blocked from being carelessly inserted into the operation part (22) thus preventing the contacts in the door switch (20) from being switched. However, in this case, the operation is troublesome because the operator needs to operate the lock lever (40, 50) by using the key (18) each time he/she locks the slider (26).

The present invention has been made in view of these circumstances and its object is to provide an actuator unit that can simply lock the slide base at the fixed base and that can make the slide base into a secure locking state in which the slide base cannot be moved relative to the fixed base by an operation from the outside.

### Means of Achieving the Objects

The present invention is an actuator unit for changing an output state of a switch. The actuator unit comprises a fixed base; a slide base having an actuator that acts on the switch and provided slidable at the fixed base so that the actuator can take an advance position in which the actuator moves closely to the switch and a retreat position in which the actuator moves away from the switch; a first locking means that locks the slide base in a first locking state relative to the fixed base in the retreat position of the actuator; an unlocking means that can unlock the first locking state by the first locking means; and a second locking means that is operatable from the outside in such a way as to cause the slide base to be unable to move relative to the fixed base in the retreat position of the actuator.

According to the present invention, at the advance position in which the actuator moves closely to the switch, the actuator acts on the switch to change the output state of the switch. At the retreat position in which the actuator moves away from the switch, the slide base is locked in the first locking state at the fixed base by the first locking means. At this time, an operation from the outside such as a key operation and the like is not necessary, thus causing the slide base to be easily locked in the first locking state. Such a first locking state can be unlocked by the unlocking means.

Next, by the operation from the outside, the second locking means causes the slide base to be unable to move relative to the fixed base. In this way, since the second locking means is locked by the operation from the outside, the slide base can be made in a secure locking state relative to the fixed base.

The second locking means may include an operation member that is operated by an operation from the outside and the operation member may act on the first locking means.

The second locking means may include an operation member that is operated by an operation from the outside and the operation member may act on the fixed base.

The unlocking means may be integrated with the first locking means.

A safety switch of the present invention may include the above-mentioned actuator unit.

### Effects of the Invention

As above-mentioned, according to the actuator unit of the present invention, since the slide base is locked at the fixed base in the first locking state by the first locking means in the retreat position of the actuator, the slide is easily locked in the first locking state without an operation from the outside. Moreover, since the second locking means is operatable from the outside in such a way as to make the slide base unmovable relative to the fixed base, the slide base can be made into a secure locking state relative to the fixed base.

### BRIEF DESCRIPTION OF THE DRAWINGS

FIG. 1 is a front elevational schematic view of a safety switch having an actuator unit according to a first embodiment of the present invention, illustrating the state in which at the time of closing of a door an actuator is transferred to an advance position where the actuator is in proximity to a switch body and inserted into the switch body;
FIG. 2 is a cross sectional view of FIG. 1 taken along line II-II;
FIG. 3 illustrates the state in which at the time of opening of the door the actuator of the safety switch of FIG. 1 is transferred to a retreat position where the actuator is away from the switch body and drawn from the switch body;
FIG. 4 is a side schematic view with a portion cut away of the actuator unit disposed at the advance position of FIG. 1, corresponding to a figure viewed from an arrow mark IV in FIG. 1;
FIG. 5 is a side schematic view with a portion cut away of the actuator unit disposed at the retreat position of FIG. 3, corresponding to a figure viewed from an arrow mark V in FIG. 3 and showing a first locking state;
FIG. 6 is a side schematic view with a portion cut away of the actuator unit disposed at the retreat position of FIG. 3, corresponding to a figure viewed from an arrow mark VI in FIG. 3 and showing a second locking state;
FIG. 7 is a side schematic view with a portion cut away of the actuator unit according to a second embodiment of the present invention, illustrating the state in which at the time of closing of the door the actuator is disposed at the advance position where the actuator is in proximity to the switch body, corresponding to FIG. 4 of the first embodiment;
FIG. 8 is a side schematic view with a portion cut away of the actuator unit according to the second embodiment of the present invention, illustrating the state in which at the time of opening of the door the actuator is disposed at the retreat position where the actuator is away from the switch body and transferred to the first or second locking state, corresponding to FIG. 5 or 6 of the first embodiment;
FIG. 9 is a front elevational schematic view of the actuator unit of FIG. 7, corresponding to the actuator unit of FIG. 1 in the first embodiment;
FIG. 10 is a front elevational schematic view of the actuator unit of FIG. 8, showing the first locking state and corresponding to the actuator unit of FIG. 3 in the first embodiment;
FIG. 11 is a front elevational schematic view of the actuator unit of FIG. 8, showing the second locking state and corresponding to the actuator unit of FIG. 3 in the first embodiment;
FIG. 12 is a side schematic view of the actuator unit according to a third embodiment of the present invention, illustrating the state in which at the time of closing of the door the actuator is disposed at the advance position where the actuator is in proximity to the switch body and corresponding to FIG. 4 in the first embodiment;
FIG. 13 is a side schematic view of the actuator unit according to the third embodiment of the present invention, illustrating the state in which at the time of opening of the door the actuator is disposed at the retreat position where the actuator is away from the switch body and transferred to the first locking state, corresponding to FIG. 5 of the first embodiment;
FIG. 14 shows the state in which the actuator moves to the second locking state at the retreat position of FIG. 13, corresponding to FIG. 6 of the first embodiment;
FIG. 15 is a side schematic view of the actuator unit according to a fourth embodiment of the present invention, illustrating the state in which at the time of closing of the door the actuator is disposed at the advance position where the actuator is in proximity to the switch body, corresponding to FIG. 4 of the first embodiment;
FIG. 16 is a side schematic view of the actuator unit according to a fourth embodiment of the present invention, illustrating the state in which at the time of opening of the door the actuator is disposed at the retreat position where the actuator is away from the switch body and transferred to the first locking state, corresponding to FIG. 5 of the first embodiment;
FIG. 17 shows the state in which the actuator moves to the second locking state at the retreat position of FIG. 16, corresponding to FIG. 6 of the first embodiment;
FIG. 18 is a front elevational schematic view of the actuator unit of FIG. 15, corresponding to the actuator unit of FIG. 1 in the first embodiment;
FIG. 19 is a front elevational schematic view of the actuator unit of FIG. 16, showing the first locking state and corresponding to the actuator unit of FIG. 3 in the first embodiment;
FIG. 20 is a front elevational schematic view of the actuator unit of FIG. 17, showing the second locking state and corresponding to the actuator unit of FIG. 3 in the first embodiment;
FIG. 21 is a side schematic view of the actuator unit according to a fifth embodiment of the present invention, illustrating the state in which at the time of closing of the door the actuator is disposed at the advance position where the actuator is in proximity to the switch body and corresponding to FIG. 4 in the first embodiment;
FIG. 22 is a side schematic view of the actuator unit according to the fifth embodiment of the present invention, illustrating the state in which at the time of opening of the door the actuator is disposed at the retreat position where the actuator is away from the switch body and transferred to the first locking state, corresponding to FIG. 5 of the first embodiment; and
FIG. 23 shows the state in which the actuator is transferred to the second locking state at the retreat position of FIG. 22, corresponding to FIG. 6 of the first embodiment.

### BEST MODE FOR CARRYING OUT THE INVENTION

Embodiments of the present invention will be hereinafter described in accordance with the appended drawings.

### <First Embodiment>

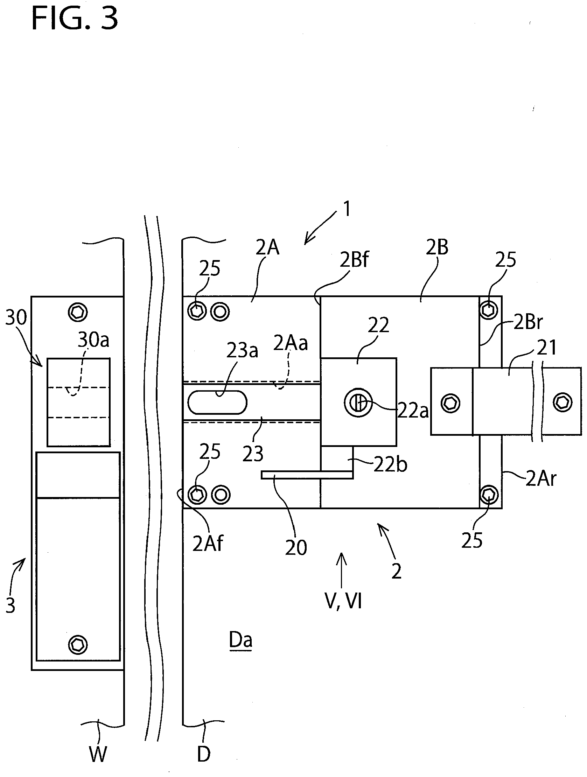

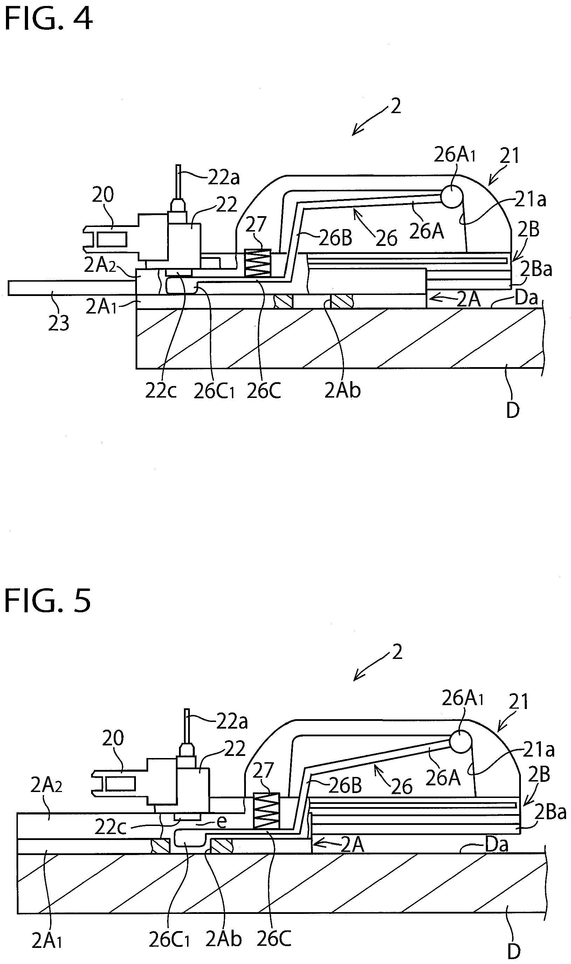

FIGS. 1 to 6 show a safety switch employing an actuator unit according to a first embodiment of the present invention. FIGS. 1 and 3 are front elevational views of the safety switch; FIGS. 4 to 6 are side schematic views with a portion cut away of the actuator unit; and FIG. 2 is a cross sectional view of FIG. 1 taken along line II-II. For explanation purposes, in the drawings excluding FIG. 2, a left-to-right direction is referred to as "a longitudinal direction" of the actuator unit, an upward/downward direction in FIGS. 1 and 3 and a direction perpendicular to pages of FIGS. 4, 5 and 6 is referred to as "a vertical direction" of the actuator unit.

As shown in FIGS. 1 and 3, a safety switch 1 includes an actuator unit 2 disposed on an openable door D at a doorway of a hazardous area where industrial machines such as machine tools, industrial robots and the like are installed, and a switch body 3 disposed at a wall (or a fixed door) W. An actuator 20 provided at the actuator unit 2 moves in the longitudinal direction to be inserted into/drawn out of the switch body 3, such that thereby contacts inside the switch body 3 are switched and the output state of the switch body 3 is changed. Here, the expression, "output state" of the switch body 3 includes not only a contact output but also a contactless output such as a transistor output.

The actuator unit 2, as shown in FIGS. 4 to 6, includes a fixed base 2A that is fixed on a surface Da of the movable door D and a slide base 2B that is slidable on the fixed base 2A in the longitudinal direction.

The fixed base 2A, as shown in FIG. 2, is comprised of an lower plate 2A₁ disposed on the surface Da of the movable door D and screwed and fixed to the surface Da and an upper plate 2A₂ fixed on the lower plate 2A₁ and having a groove 2Aa of inverted T-shape. The groove 2Aa extends through the fixed base 2A in the longitudinal direction (i.e. a direction perpendicular to the page of FIG. 2) and opens at a front end 2Af and a rear end 2Ar of the fixed base 2 (see FIG. 3).

A bottom portion of the slide base 2B, as shown in FIG. 2, includes a proximal portion 2Ba that has a complimentary shape with respect to the groove 2Aa of the fixed base 2A and that is engaged with and longitudinally slidable along the groove 2Aa. At the proximal portion 2Ba, a lower portion of a handle 21 is fixedly attached. The handle 21 is a longitudinally extending channel-shaped member as viewed from the side and has an opening 21a for inserting an operator's fingers (see FIGS. 4 to 6) . According to this constitution, the operator holds the handle 21 to apply a force in the longitudinal direction, such that thereby the movable door D opens/closes and the slide base 2B slidingly moves relative to the fixed base 2A in the longitudinal direction.

Ahead of the handle 21 on the slide base 2B, a lock 22 is provided (see the drawings excluding FIG. 2). a key 22a is inserted into or pulled out of the lock 22 (Each of the drawings shows the state in which the key 22a is inserted into the lock 22). The key 22a can be pulled out of the lock 22 only in the second locking state described below. The actuator 20 is fitted to the lock 22 through an attachment member 22b (see FIGS. 1 and 3) . A movement of the slide base 2B causes the actuator 20 to take an advance position (FIG. 1) in which the actuator 20 moves toward the switch body 3 and a distal end of the actuator 20 is inserted into the switch body 3 and a retreat position (FIG. 3) in which the actuator 20 moves away from the switch body 3. At the time of closing of the movable door D, the actuator 20 is disposed at the advance position, and at the time of opening of the movable door D, the actuator 20 is disposed at the retreat position.

At the advance position, a front end 2Bf of the slide base 2B is substantially flush with a front end 2Af of the fixed base 2A (see FIG. 1), and at the retreat position, the front end 2Bf of the slide base 2B is transferred rearwardly from the front end 2Af of the fixed base 2A (see FIG. 3). Also, at the advance position, a rear end 2Br of the slide base 2B is disposed forwardly from a rear end 2Ar of the fixed base 2A (see FIG. 1), and at the retreat position, the rear end 2Br of the slide base 2B is disposed slightly forwardly from the rear end 2Ar of the fixed base 2A in the vicinity of the rear end 2Ar of the fixed base 2A and at this time the rear end 2Br of the slide base 2B contacts attaching screws 25 of the fixed base 2A (see FIG. 3) . That is, in this exemplification, the attaching screws 25 are stops for blocking a rearward slide movement of the slide base 2B.

A forepart of the slide base 2B, as shown in FGIS. 1, 3 and 4, has a gate bar 23 extending in the longitudinal direction. On the other hand, above the switch body 3 on the wall W, a bar-receiving portion 30 is provided that receives the gate bar 23 moving into and out of the bar-receiving portions 30. The bar-receiving portion 30 is formed with a through hole 30a which the gate bar 23 is inserted into. The gate bar 23 is inserted into the through hole 30a of the bar-receiving portion 30 at the advance position of the actuator 20 (see FIG. 1) and is disposed away from the bar-receiving portion 30 at the retreat position of the actuator 20. Also, at the distal end of the gate bar 23, there is formed a padlock hole 23a for engaging a padlock (not shown).

The actuator unit 2, as shown in FIGS. 4 to 6, includes an operation bar unit 26 extending from the opening 21a of the handle 21 to the inside of the slide base 2B. The operation bar unit 26 has a generally inverted Z-shape (or Z-shape, S-shape) as viewed from the side. The operation bar unit 26 has one end that is pivotably connected to a rear corner of the opening 21a of the handle 21 through a pivot 26A₁. The operation bar unit 26 also has a first linear part 26 extending linearly substantially in the longitudinal direction, a second linear part 26B (see FIG. 2) that extends linearly toward the proximal portion 2Ba of the slide base 2B and an end of which is coupled to the other end of the first linear part 26 in the opening 21a, and a third linear part 26C that extends linearly substantially in the longitudinal direction, an end of which is coupled to the other end of the second linear part 26B inside the proximal portion 2Ba and that has a locking part 26C₁ at a distal end thereof protruding toward the fixed base 2A and abutting on the lower plate 2A₁. The first to third linear parts 26A, 26B, 26C of the operation bar unit 26 is structured in such a way as to, for example, bend a thin metal plate.

Inside the proximal portion 2Ba of the slide base 2B, a coil spring 27 is provided in a compressed state and an end of the coil spring 27 is pressed against the third linear part 26C of the operation bar unit 26. Thereby, a spring force (or an elastic repulsion) of the coil spring 27 is imparted to the third linear part 26C and the third linear part 26C is biased toward the fixed base 2A. On the other hand, the fixed base 2A is formed with an engagement hole 2Ab that the locking part 26C₁ of the third linear part 26C can be engaged with.

At the advance position (FIGS. 1 and 4) where the actuator 20 is in proximity to the switch body 3, the locking part 26C₁ of the third linear part 26C of the operation bar unit 26 is disposed ahead of the engagement hole 2Ab of the fixed base 2A. At this time, a bottom portion 22c of the lock 22 faces the locking part 26C₁ (see FIG. 4) .

At the retreat position (FIGS. 3, 5 and 6) where the actuator 20 is disposed away from the switch body 3, the locking part 26C₁ of the third linear part 26C of the operation bar unit 26 is engaged with the engagement hole 2Ab of the fixed base 2A. At this time, the slide base 2B is locked in a first locking state relative to the fixed base. Therefore, the locking part 26C₁ of the third linear part 26C and the coil spring 27 functions as a first locking mechanism (or a first locking means) that causes the slide base 2B to be in the first locking state. At this juncture, there is formed a gap e between the locking part 26C₁ and the bottom portion 22c of the lock 22.

Here, as can be seen by focusing on a side shape of the operation bar unit 26, in the state shown in FIG. 4, the first linear part 26A in the first locking state of FIG. 5 rotates around the pivot 26A₁ against the spring force of the coil spring 27 and thus the third linear part 26C moves away from the fixed base 2A through the second linear part 26B, which is the state in which the first locking state is unlocked. Therefore, the first to third linear parts 26A, 26B and 26C act as an unlocking means that unlocks the first locking state.

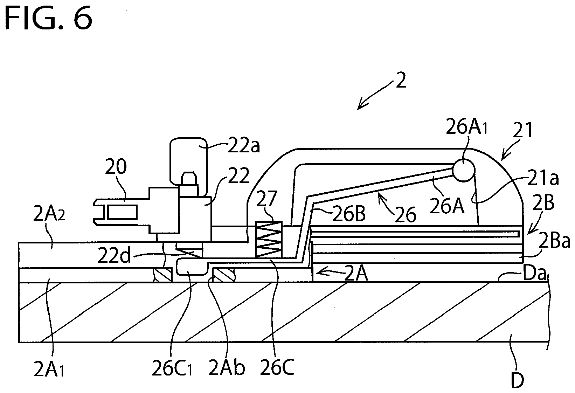

Also, in the state shown in FIG. 6, an operation member 22d of the lock 22 in the first locking state of FIG. 5 protrudes into the gap e by an operation of the key 22a and comes into contact with the locking part 26C₁. At this time, the third linear part 26C of the operation bar unit 26 cannot move away from the fixed base 2A, which is the state in which unlocking by the unlocking means cannot be performed, and the slide base 2B is locked in a second locking state relative to the fixed base 2A. Therefore, the lock 22 functions as a second locking means that causes the slide base 2B to be in the second locking state where the slide base 2B cannot move relative to the fixed base 2A.

Next, effects of the present embodiment will be explained.

As above-mentioned, in the closing state (FIG. 1) of the movable door D, the slide base 2B of the actuator unit 2 on the side of the movable door D slide-moves ahead of the fixed base 2A. The actuator 20 is disposed at the advance position in which the actuator 20 is in proximity to the switch body 3 on the side of the wall W, the actuator 20 is inserted into the switch body 3, and the gate bar 23 is inserted into the bar-receiving part 30. At this time, as shown in FIG. 4, the locking part 26C₁ of the third linear part 26C of the operation bar unit 26 is disposed ahead of the engagement hole 2Ab of the fixed base 2A, the bottom portion 22c of the lock 22 faces the locking part 26C₁, and the spring force of the coil spring 27 is imparted to the third linear part 26C.

From this state, in opening the movable door D, the operator holds the upper portion of the handle 21 along with the first linear part 26A of the operation bar unit 26 and moves the handle 21 rearwardly (i.e. to the right direction in FIG. 4) . At this time, since the lower portion of the handle 21 is fixed to the slide base 2B, the handle 21 moves rearwardly in a smooth manner through a slide movement of the slide base 2B and the locking part 26C₁ of the third linear part 26C of the operation bar unit 26 slides along the lower plate 2A₁. A slide movement of the slide base 2B causes the actuator 20 to be drawn out of the switch body 3 and the gate bar 23 to be pulled out of the bar-receiving part 30. Then, when the rear end 2Br of the slide base 2B comes into contact with the attaching screws 25 and the slide base 2B stops (see FIG. 3), as shown in FIG. 5, the actuator 20 is disposed at the retreat position where the actuator is spaced away from the switch body 3.

At the retreat position, by the spring force of the coil spring 27, the third linear part 26C of the operation bar unit 26 is transferred toward the fixed base 2A, the locking part 26C₁ of the distal end of the third linear part 26C is engaged with the engagement hole 2Ab of the fixed base 2A, and the slide base 2B is locked in the first locking state relative to the fixed base 2A (see FIG. 5). At this juncture, the first linear part 26A of the operation bar unit 26 rotates downwardly around the pivot 26A₁, thus forming a gap e between the bottom portion 22c of the lock 22 and the locking part 26C₁.

In such a manner, at the time of opening of the movable door D, all that the operator has to do is to hold the handle 21 to move it in the opening direction of the movable door D, thereby locking the slide base 2B in the first locking state relative to the fixed base 2A. At this time, since an extra operation from the outside such as a key operation and the like is not necessary, the slide base 2B can be easily locked in the first locking state.

In the first locking state (FIG. 5), even in the event that a human body such as an operator body, etc. bumps the handle 21 to close the movable door D, alternatively, influence of the wind from the outside causes the movable door D to be closed, the slide base 2B maintains the first locking state. Therefore, the actuator 20 will not protrude toward the switch body 3, thus preventing the actuator 20 from bumping an outside surface of the switch body 3 and also from interfering with a human boy. As a result, a damage or breakage of parts of the safety switch 1 can be prevented and a danger to the human body can be evaded. Also, since the actuator 20 is not transferred to the advance position, contacts inside the switch body 3 will not be changed, thus securing a human's safety.

Then, by operating the key 22a from the first locking state shown in FIG. 5, as shown in FIG. 6, the operation member 22d of the lock 22 protrudes into the gap e to contact the locking part 26C₁, such that thereby the slide base 2B is made into the second locking state relative to the fixed base 2A. At this time, the actuator 20 remains the retreat position.

In the second locking state (FIG. 6), when the operator enters the hazardous area, he/she pulls out the key 22a from the lock 22 and takes it into the area. By so doing, when another worker is going to close the movable door D carelessly and holds the upper portion of the handle 21 along with the first linear part 26A of the operation bar unit 26, the first linear part 26A cannot rotate around the pivot26A₁ against the spring force of the coil spring 27. Because at this time the operation member 22d of the lock 22 is in contact with the locking part 26C₁ of the third linear part 26C of the operation bar unit 26 and thus the locking part 26C₁ cannot be disengaged from the engagement hole 2Ab of the fixed base 2A. That is, the locking state shown in FIG. 6 is a state that an unlock by the unlocking means cannot be performed and the slide base 2B is caused to be unmovable relative to the fixed base 2A.

In such a fashion, since the second locking state is achieved by a key operation, the slide base 2B can be securely locked at the fixed base in the second locking state.

Then, in closing the movable door D, by operating the key 22a from the second locking state (FIG. 6), the operating member 22d of the lock 22 is retracted (see FIG. 5) and thus the second locking state is unlocked, returning to the first locking state.

From this state, the operator holds the upper portion of the handle 21 together with the first linear part 26A of the operation bar unit 26. Then, the first linear part 26A rotates around the pivot 26A₁ against the spring force of the coil spring 27, such that thereby the third linear part 26C is moved away from the fixed base 2A through the second linear part 26B and thus the locking part 26C₁ at the distal end disengages from the engagement hole 2Ab of the fixed base 2A.

When the operator moves the handle 21 forwardly (i.e. to the left direction in FIG. 5) holding the upper portion of the handle 21 along with the first linear part 26A of the operation bar unit 26, the slide base 2B slide-moves forwardly with the locking part 26C₁ sliding on the lower plate 2A₁, and the actuator 20 and the gate-bar member 23 protrude toward the switch body 3 (see FIG. 4). When the movable door D is closed and the actuator 20 is disposed at the advance position where the actuator 20 is in proximity to the switch body 3 on the wall W side, the actuator 20 is inserted into the switch body 3 to change the contacts in the switch body 3 and the gate bar members 23 is inserted into the gate-receiving part 30.

According to the above-mentioned embodiment, when the slide base 2B is transferred to the retreat position of the actuator 20, the slide base 2B is locked in the first locking state by the first locking means, thereby facilitating locking of the slide base 2B in the first locking state. Moreover, the slide base 2B is locked in the second locking state by the second locking means through an operation of the key 22a, thereby allowing for securely locking the slide base 2B in the second locking state. Furthermore, at the time of opening of the movable door D, since the actuator 20 is kept in the retreat position, a breakage or damage to the parts of the safety switch can be avoided.

### <Second Embodiment>

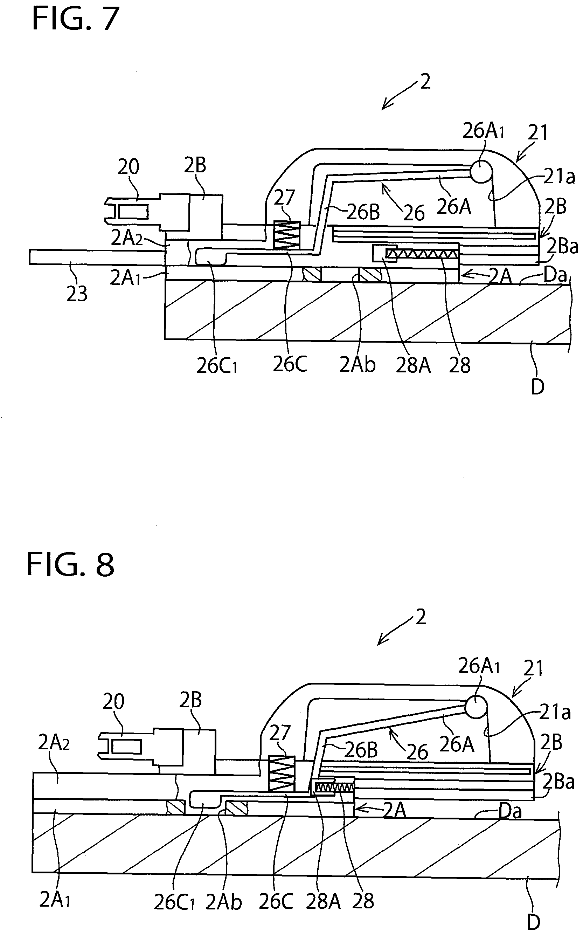

FIGS. 7 to 11 show an actuator unit according to a second embodiment of the present invention. FIGS. 7 and 8 are side schematic views with a portion cut away of the actuator unit; and FIGS. 9 to 11 are front elevational schematic views of the actuator unit. In the drawings, like reference characters indicate identical or functionally similar elements to those in the first embodiment. Also, as with the first embodiment, a left-to-right direction in the drawings is referred to as a longitudinal direction of the actuator unit, and a direction perpendicular to the pages of FIGS. 7, 8 or a left-to-right direction in FIGS. 9, 10, 11 is referred to as a vertical direction of the actuator unit.

In this second embodiment as well, similar to the first embodiment, the actuator unit 2 includes the operation bar unit 26 and the coil spring 27 (see FIG. 7) imparting a spring force (or elastic resilience) to the third linear part 26C of the operation bar unit 26. By engaging the locking part 26C₁ of the third linear part 26C with the engagement hole 2Ab of the fixed base 2A, the first locking state is achieved (see FIG. 8) . Also, when the operator holds the first linear part 26A of the operation bar unit 26 along with the handle 21 to move the third linear part 26C away from the fixed base 2A through the second linear part 26B of the operation bar unit 26, the locking part 26C₁ of the third linear part 26C disengages from the engagement hole 2Ab thus unlocking the first locking state.

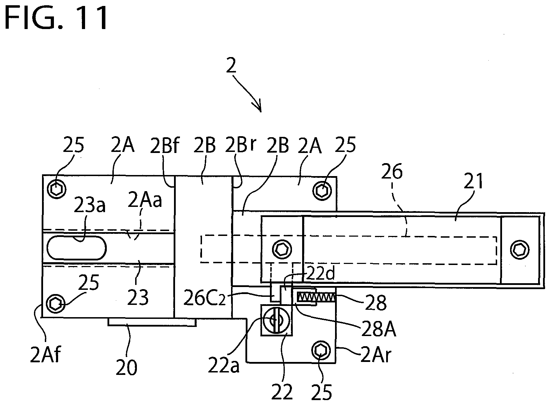

According to the second embodiment, the second locking means differs from that of the first embodiment. As shown in FIGS. 9 to 11, the lock 22 is provided on the rear end side of the fixed base 2A of the actuator unit 2. The lock 22 has a rotation piece (or operation member) 22d rotatable by an operation of the key 22a. The rotation piece 22d is a member of for example, a rectangular shape as viewed from the front. As shown in FIGS. 9 and 10, the rotation piece 22d can take a longitudinal position in which its elongated direction corresponds to the longitudinal direction, and as shown in FIG. 11, the rotation piece 22d can take a vertical position in which its elongated direction corresponds to the vertical direction.

As shown in FIGS. 9 to 11, in the vicinity of the lock 22 on the rear end side of the fixed base 2A of the actuator unit 2, there is provided a coil spring 28 extending in the longitudinal direction and at a front end of the coil spring 28 a cap member 28A is fitted. On the other hand, in the slide base 2B, the operation bar unit 26 has a projecting part 26C₂ that projects downwardly. The projecting part 26C₂ is a member of for example, a rectangular shape as viewed from the front and an end of the projecting part 26C₂ is fixedly attached to the third linear part 26C of the operation bar unit 26. In the advance position of the actuator 20 shown in FIG. 9, the projecting part 26C₂ is disposed forwardly away from the cap member 28A of the coil spring 28. In the retreat position of the actuator 20 shown in FIGS. 10 and 11, the projecting part 26C₂ comes into contact with the cap member 28A of the coil spring 28 to compress the coil spring 28. Also, in the retreat position shown in FIG. 11, the rotation piece 22d of the lock 22 is disposed above (i.e. out-of-the-page direction of FIG. 11) the projecting part 26C₂ and faces the projecting part 26C₂ and thus the rotation piece 22d contacts or is in close vicinity of the projecting part 26C₂.

Next, effects of the second embodiment will be explained.

As with the first embodiment, in the closing state of the movable door, the slide base 2B of the actuator unit 2 slide-moves ahead of the fixed base 2A, and the actuator 20 is disposed at the advance position in which the actuator 20 is in the vicinity of the switch body (see FIGS. 7, 9). From this state, in opening the movable door, the operator holds the upper portion of the handle 21 along with the first linear part 26A of the operation bar unit 26 and moves the handle 21 rearwardly (i.e. to the right direction in FIGS. 7, 9). Then, the slide base 2B slide-moves rearwardly relative to the fixed base 2A and the actuator 20 is transferred to the retreat position away from the switch body.

At the retreat position, similar to the first embodiment, by the spring force of the coil spring 27, the third linear part 26C of the operation bar unit 26 is transferred toward the fixed base 2A, the locking part 26C₁ of the distal end of the third linear part 26C engages with the engagement hole 2Ab of the fixed base 2A (FIGS. 8, 10), and the slide base 2B is locked in the first locking state relative to the fixed base 2A. Also, at this juncture, the projecting part 26C₂ of the operation bar unit 26 comes into contact with the cap member 28A of the coil spring 28 to compress the coil spring 28 (see FIG. 10).

In this case as well, at the time of opening of the movable door, all that the operator has to do is to hold the handle 21 to move it in the opening direction of the movable door, thereby locking the slide base 2B in the first locking state relative to the fixed base 2A. At this time, since an extra operation from the outside such as a key operation and the like is not necessary, the slide base 2B can be easily locked in the first locking state.

In the first locking state (FIG. 10), similar to the first embodiment, even in the event that a human body such as an operator body, etc. bumps the handle 21 to close the movable door, alternatively, influence of the wind from the outside causes the movable door to be closed, the slide base 2B maintains the first locking state. Therefore, the actuator 20 will not protrude toward the switch body, thus preventing the actuator 20 from bumping an outside surface of the switch body and also from interfering with a human boy. As a result, a damage or breakage of parts of the safety switch can be prevented and a danger to the human body can be evaded. Also, the actuator 20 will not be transferred to the advance position and contacts inside the switch body will not be changed, thus securing a human's safety.

Then, by operating the key 22a from the first locking state shown in FIGS. 8 and 10, as shown in FIG. 11, the rotation piece 22d of the lock 22 is rotated from the longitudinal position to the vertical position. Thereby, the rotation piece 22d is disposed opposite the projecting part 26C₂ of the operation bar unit 26 on the front side of the projecting part 26C₂ (see FIG. 11), and thus the slide base 2B is locked in the second locking state relative to the fixed base 2A. At this juncture, the actuator 20 is kept in the retreat position.

In the second locking state (FIG. 11), when the operator enters the hazardous area, he/she pulls out the key 22a from the lock 22 and takes it into the area. By so doing, when another worker is going to close the movable door carelessly and holds the upper portion of the handle 21 along with the first linear part 26A of the operation bar unit 26, the first linear part 26A cannot rotate around the pivot 26A₁ against the spring force of the coil spring 27. Because at this time the projecting part 26C₂ fixed at the third linear part 26C of the operation bar unit 26 interferes with the rotation piece 22d of the lock 22 and thus the locking part 26C₁ cannot be disengaged from the engagement hole 2Ab of the fixed base 2A. That is, the second locking state shown in FIG. 11 is a state that an unlock by the unlocking means cannot be performed and the slide base 2B is caused to be unmovable relative to the fixed base 2A.

In such a fashion, since the second locking state is achieved by a key operation, the slide base 2B can be securely locked at the fixed base in the second locking state.

Then, in closing the movable door, by operating the key 22a from the second locking state (FIG. 11), the rotation piece 22d of the lock 22 is rotated from the vertical position to the longitudinal position (see FIG. 10), thus unlocking the second locking state to return to the first locking state.

From this state, the operator holds the upper portion of the handle 21 together with the first linear part 26A of the operation bar unit 26. Then, the first linear part 26A rotates around the pivot 26A₁ against the spring force of the coil spring 27, such that thereby the third linear part 26C is moved away from the fixed base 2A through the second linear part 26B and thus the locking part 26C₁ at the distal end disengages from the engagement hole 2Ab of the fixed base 2A.

When the operator moves the handle 21 forwardly (i.e. to the left direction in FIG. 8) holding the upper portion of the handle 21 along with the first linear part 26A of the operation bar unit 26, the slide base 2B slide-moves forwardly with the locking part 26C₁ sliding on the lower plate 2A₁, and the actuator 20 is disposed at the advance position where the actuator 20 is in proximity to the switch body on the wall side (see FIGS. 7, 9).

When the actuator 20 moves from the retreat position to the advance position, the projecting part 26C₂ of the third linear part 26C of the operation bar unit 26 gradually leaves the cap member 28A of the coil spring 28. Thereby, the coil spring 28 that has been compressed due to a contact of the projecting part 26C₂ with the cap member 28A gradually extends in the longitudinal direction. When the projecting part 26C₂ is completely separated from the cap member 28A, as shown in FIG. 9, the cap member 28A is positioned opposite the rotation piece 22d of the lock 22 that is disposed in the longitudinal direction. In this state, even when the operator operates the key 22a to try to rotate the rotation piece 22d of the lock 22 from the longitudinal position to the vertical position, the rotation piece 22d interferes with the cap member 28A and thus the operator cannot rotate the rotation piece 22d.

According to the above-mentioned embodiment, when the actuator 20 is transferred to the retreat position, the slide base 2B is locked in the first locking state, thereby facilitating locking of the slide base 2B in the first locking state. Moreover, the slide base 2B is locked in the second locking state through an operation of the key 22a, thereby allowing for securely locking the slide base 2B in the second locking state. Furthermore, at the time of opening of the movable door, since the actuator 20 is kept in the retreat position, a breakage or damage to the parts of the safety switch can be avoided.

### <Third Embodiment>

FIGS. 12 to 14 show an actuator unit according to a third embodiment of the present invention. In the drawings, like reference characters indicate identical or functionally similar elements to those in the first and second embodiments. Also, as with the first embodiment, a left-to-right direction in the drawings is referred to as a longitudinal direction of the actuator unit, and a direction perpendicular to the pages of the drawings is referred to as a vertical direction of the actuator unit. According to the third embodiment, the first and second locking means differ from those of the first and second embodiments.

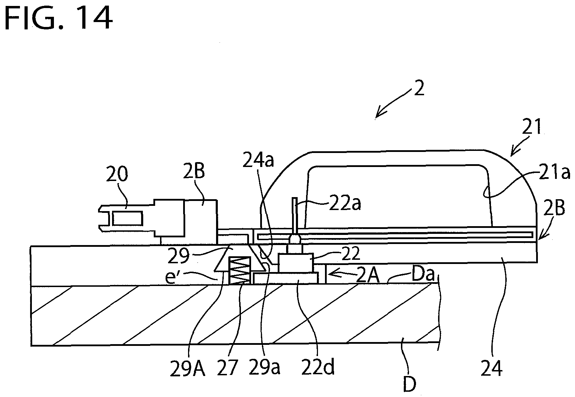

As shown in FIGS. 12 to 14, the slide base 2B includes a longitudinally extending proximal portion 24 having an inclined surface 24a at a front end thereof. The inclined surface 24a is inclined in such a way as to gradually leave the switch body (which is disposed on a left side of the drawings) toward the fixed base 2A. On the rear side of the fixed base 2A, the lock 22 is provided. The lock 22 has a rotation piece (i.e. operation member) 22d that is rotatable by operation of the key 22a. The rotation piece 22d is, for example, a rectangular member, and can take a vertical position in which its elongated direction coincides with the vertical direction as shown in FIGS. 12, 13 and a longitudinal position in which its elongated direction coincides with the longitudinal direction as shown in FIG. 14 .

In front of and near the lock 22 on the rear end side of the fixed base 2A, there is provided a coil spring 27 having a cap member 29 fitted to one end thereof. The cap member 29 is, for example, a soft elastic member that has a lower modulus of elasticity and that is readily elastically deformable. The cap member 29 may have a truncated pyramid-shape, which includes a bottom surface 29A of a large diameter that is disposed opposite the fixed base 2A. The cap member 29 includes an inclined surface 29a formed on its side surface, which is adapted to face the inclined surface 24a at the front end of the proximal portion 24 of the slide base 2B and has an inclination that corresponds to that of the inclined surface 24a.

In the advance position (FIG. 12) where the actuator 20 is in proximity to the switch body, the proximal portion 24 of the slide base 2B press-contacts a top surface 29B of the cap member 29 to compression-deform the cap member 29 and the coil spring 27. Thereby, a spring force of the coil spring 27 is imparted to the proximal portion 24. In the retreat position (FIGS. 13 and 14) where the actuator 20 is away from the switch body, the coil spring 27 extends and the inclined surface 24a at the front end of the proximal portion 24 of the slide base 2B is disposed opposite the inclined surface 29a on the side surface of the cap member 29. At this time, between the bottom surface 29A of the cap member 29 and the bottom surface of the fixed base 2A, there is formed a gap e'. The gap e' has an extent that the rotation piece 22d of the lock 22 is insertable.

The state shown in FIG. 13 is a state in which when the slide base 2B moves to the left direction of the drawing from this state, the inclined surface 24a of the proximal portion 24 of the slide base 2B interferes with the inclined surface 29a of the sides of the cap member 29, such that thereby the inclined surface 24a cannot get over the inclined surface 29a easily. Such a state is a first locking state of the slide base 2B. Therefore, according to the present invention, the proximal portion 24, the cap member 29 and the coil spring 27 constitute the first locking means.

In unlocking the first locking state to be transferred to the state shown in FIG. 12, the inclined surface 24a of the proximal portion 24 needs to impart a pressing force to the inclined surface 29a of the cap member 29 to compression-deform the cap member 29 and the coil spring 27. At the time of this compressive deformation, the gap e' between the bottom surface 29A of the cap member 29 and the bottom surface of the fixed base 2A may be zero or considerably small (see FIG. 12) . Therefore, in the present invention, the inclined surface 24a of the proximal portion 24 of the slide base 2B and the inclined surface 29a of the cap member 29 constitute an unlocking means.

The state shown in FIG. 14 is a state in which the rotation piece 22d of the lock 22 is inserted into the gap e' formed between the bottom surface 29A of the cap member 29 and the bottom surface of the fixed base 2A, and when the slide base 2B moves from this state to the state of FIG. 12, a compressive deformation of the cap member 29 and coil spring 27 is blocked by the rotation piece 22d, the cap member 29 and coil spring 27 cannot compression-deform, and thus the first locking state cannot be unlocked, which is a second locking state where the slide base 2B cannot move relative to the fixed base 2A. Therefore, in the present invention as well, the lock 22 constitutes the second locking means.

Next, effects of the third embodiment will be explained.

As with the first and second embodiments, in the closing state of the movable door, the slide base 2B of the actuator unit 2 slide-moves ahead of the fixed base 2A, and the actuator 20 is disposed at the advance position in which the actuator 20 is in the vicinity of the switch body (see FIG. 12) . From this state, in opening the movable door, the operator holds the upper portion of the handle 21 and moves the handle 21 rearwardly (i.e. to the right direction in FIG. 12) . Then, the slide base 2B slide-moves rearwardly relative to the fixed base 2A and the actuator 20 is transferred to the retreat position where the actuator 20 is disposed away from the switch body (FIG. 13).

At the retreat position, the proximal portion 24 of the slide base 2B is moved to the rear side of the cap member 29 and the coil spring 27, the inclined surface 24a of the proximal portion 24 faces the inclined surface 29a of the cap member 29 and the slide base 2B is thus locked in the first locking state relative to the fixed base 2A (see FIG. 13). Also, at this juncture, the cap member 29 and the coil spring 27 extend from the state of compressive deformation in FIG. 12.

In this case as well, at the time of opening of the movable door, all that the operator has to do is to hold the handle 21 to move it in the opening direction of the movable door, thereby locking the slide base 2B in the first locking state relative to the fixed base 2A. At this time, since an extra operation from the outside such as a key operation and the like is not necessary, the slide base 2B can be easily locked in the first locking state.

In the first locking state (FIG. 13), similar to the first and second embodiments, even in the event that a human body such as an operator body, etc. bumps the handle 21 to close the movable door, alternatively, influence of the wind from the outside causes the movable door to be closed, the slide base 2B maintains the first locking state. Therefore, the actuator 20 will not protrude toward the switch body, thus preventing the actuator 20 from bumping an outside surface of the switch body and also from interfering with a human boy. As a result, a damage or breakage of parts of the safety switch can be prevented and a danger to the human body can be evaded. Also, the actuator 20 will not be transferred to the advance position and contacts inside the switch body will not be changed, thus securing a human's safety.

Then, by operating the key 22a from the first locking state shown in FIG. 13, as shown in FIG. 14, the rotation piece 22d of the lock 22 is rotated from the vertical position to the longitudinal position. Thereby, the rotation piece 22d is inserted into the gap e' between the bottom surface 29A of the cap member 29 and the bottom surface of the fixed base 2A, and thus the slide base 2B is locked in the second locking state relative to the fixed base 2A. At this juncture, the actuator 20 is kept in the retreat position.

In the second locking state (FIG. 14), when the operator enters the hazardous area, he/she pulls out the key 22a from the lock 22 and takes it into the area. By so doing, when another worker is going to close the movable door carelessly and holds the upper portion of the handle 21 to move it in the closing direction of the movable door, the inclined surface 24a of the proximal portion 24 of the slide base 2B interferes with and presses the inclined surface 29a of the cap member 29, but a compressive deformation of the cap member 29 and the coil spring 27 is blocked by the rotation piece 22d of the lock 22. As a result, the proximal portion 24 of the slide base 2B cannot get over the cap member 29 and the coil spring 27 to move toward the switch body. That is, the second locking state shown in FIG. 14 is a state that unlocking by the unlocking means cannot be performed and the slide base 2B is caused to be unmovable relative to the fixed base 2A.

In such a fashion, since the second locking state is achieved by a key operation, the slide base 2B can be securely locked at the fixed base in the second locking state.

Then, in closing the movable door, by operating the key 22a from the second locking state (FIG. 14), the rotation piece 22d of the lock 22 is rotated from the longitudinal position to the vertical position (see FIG. 13), thus unlocking the second locking state to return to the first locking state.

From this state, the operator holds the upper portion of the handle 21 and moves the slide base 2B forwardly (i.e. in the left direction of FIG. 13). Then, the inclined surface 24a at the front end of the proximal portion 24 of the slide base 2B comes into contact with the inclined surface 29a of the cap member 29 to compression-deform the cap member 29 and the coil spring 27. As a result, the proximal portion 24 of the slide base 2B gets over the cap member 29 and the coil spring 27 to move in the left direction of FIG. 13 (i.e. toward the switch body side), and the actuator 20 is disposed at the advance position where the actuator 20 is in proximity to the switch body on the wall side (FIG. 12).

When the actuator 20 moves from the retreat position to the advance position, the proximal portion 24 of the slide base 2B compressive-deforms the cap member 29 and the coil spring 27 and thus there is not formed the gap e' between the bottom surface 29A of the cap member 29 and the fixed base 2A. In this state, even when the operator operates the key 22a to try to rotate the rotation piece 22d of the lock 22 from the vertical position to the longitudinal position, the rotation piece 22d interferes with the cap member 29 and thus the operator cannot rotate the rotation piece 22d.

According to the above-mentioned embodiment, when the actuator 20 is transferred to the retreat position, the slide base 2B is locked in the first locking state, thereby facilitating locking of the slide base 2B in the first locking state. Moreover, the slide base 2B is locked in the second locking state through an operation of the key 22a, thereby allowing for securely locking the slide base 2B in the second locking state. Furthermore, at the time of opening of the movable door, since the actuator 20 is kept in the retreat position, a breakage or damage to the parts of the safety switch can be avoided.

### <Fourth Embodiment>

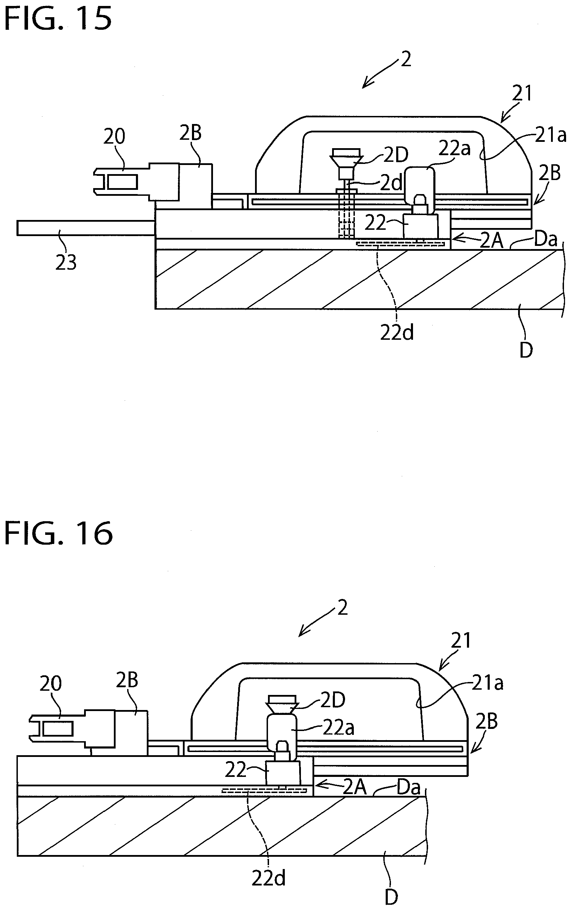

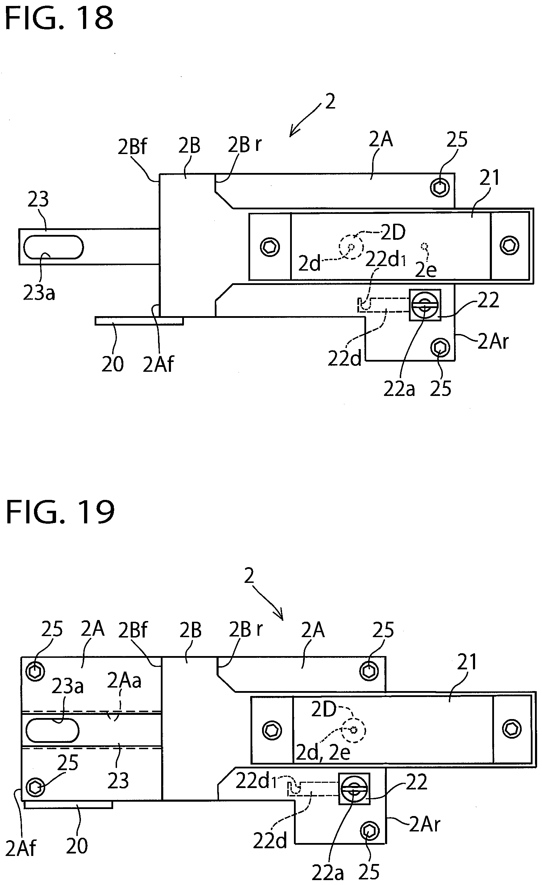

FIGS. 15 to 20 show an actuator unit according to a fourth embodiment of the present invention. FIGS. 15 to 17 are side schematic views of the actuator unit; and FIGS. 18 to 20 are front elevational schematic views of the actuator unit. In the drawings, like reference characters indicate identical or functionally similar elements to those in the first to third embodiments. Also, as with the first embodiment, a left-to-right direction in the drawings is referred to as a longitudinal direction of the actuator unit, and a direction perpendicular to the pages of FIGS. 15 to 17 or a top-to-down direction in FIGS. 18 to 20 is referred to as a vertical direction of the actuator unit. According to the fourth embodiment, the first and second locking means differ from those of the first to third embodiments.

As shown in FIGS. 15 and 18, the actuator unit 2 includes a small knob 2D. The knob 2D is disposed in the opening 21a of the handle 21 and has a size enough to be nipped with two fingers of the operator when he/she holds the handle 21. The knob 2D is fixed at an end of a supporting shaft 2d (see fig. 15), which extends through the slide base 2B. A compression spring (not shown) is provided around the supporting shaft 2d in the slide base 2B. By a spring force of the compression spring, the other end (i.e. a distal end) of the supporting shaft 2d is biased to protrude toward the fixed base 2A at all times.

As shown in FIGS. 18 to 20, the fixed base 2A has an engagement hole 2e formed therein that is engageable with the distal end of the supporting shaft 2d. The distal end of the supporting shaft 2d is engageable with the engagement hole 2e in the retreat position of the actuator 20 (see FIG. 19) . At this time, the slide base 2B is disposed in the first locking state relative to the fixed base 2A (FIGS. 16 and 19) . Therefore, in the present embodiment, the supporting shaft 2d, the compression spring and the engagement hole 2e constitute the first locking means. Also, in this case, when the operator nips the knob 2D with two fingers to pull it, the distal end of the supporting shaft 2d disengages from the engagement hole 2e of the fixed base 2A to unlock the first locking state. Accordingly, the knob 2D constitutes an unlocking means.

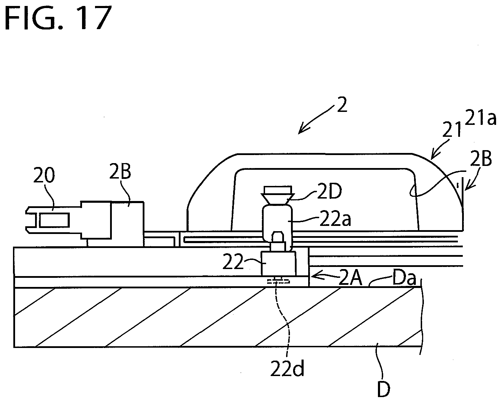

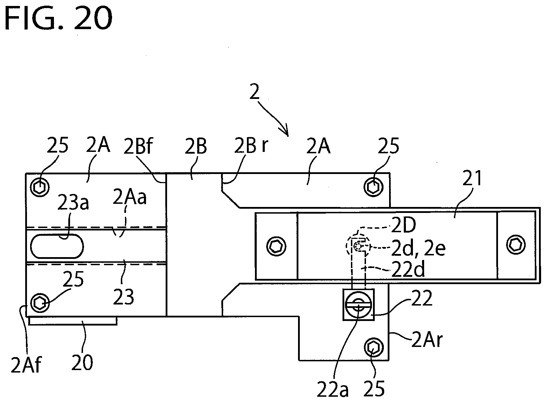

As shown in FIGS. 15 to 20, there is provided a lock 22 on the rear end side of the fixed base 2A of the actuator unit 2. The lock 22 includes a rotation piece (or operation member) 22d that is rotatable by an operation of the key 22a. The rotation piece 22d may be, for example, a rectangular-shaped member as viewed from the front side. The rotation piece 22d takes a longitudinal position in which its elongated direction coincides with the longitudinal direction as shown in FIGS. 15, 16, 18 and 19, and a vertical position in which its elongated direction coincides with the vertical direction as shown in FIGS. 17 and 20. The rotation piece 22d has a notch 22d₁ formed at a distal end of thereof (see FIGS. 18 and 19) . In the retreat position of the actuator 20 (see FIG. 20), the notch 22d₁ engages with an engaged part (not shown) such as a notch, locking plate or the like provided at the supporting shaft 2d of the knob 2D, thereby preventing the distal end of the supporting shaft 2d from moving away and disengaging from the engagement hole 2e of the fixed base 2A.

The state shown in FIG. 20 is a state where the first locking state is not unlocked and the slide base 2B is thus unable to move relative to the fixed base 2A, which is the second locking state of the slide base 2B. Therefore, in the present embodiment as well, the lock 22 constitutes the second locking means.

Next, effects of the fourth embodiment will be explained. As with the first to third embodiments, in the closing state of the movable door, the slide base 2B of the actuator unit 2 slide-moves ahead of the fixed base 2A, and the actuator 20 is disposed at the advance position in which the actuator 20 is in the vicinity of the switch body (see FIGS. 15 and 18). From this state, in opening the movable door, the operator holds the upper portion of the handle 21 and moves the handle 21 rearwardly (i.e. in the right direction of FIGS. 15 and 18). Then, the slide base 2B slide-moves rearwardly relative to the fixed base 2A and the actuator 20 is transferred to the retreat position where the actuator is disposed away from the switch body (FIGS. 16 and 19) .

At the retreat position, the distal end of the supporting shaft 2d of the knob 2D having moved along with the slide base 2B is in engagement with the engagement hole 2e of the fixed base 2A (FIG. 19), and thus the slide base 2B is locked in the first locking state relative to the fixed base 2A.

In this case as well, at the time of opening of the movable door, all that the operator has to do is to hold the handle 21 to move it in the opening direction of the movable door, thereby locking the slide base 2B in the first locking state relative to the fixed base 2A. At this time, since an extra operation from the outside such as a key operation and the like is not necessary, the slide base 2B can be easily locked in the first locking state.

In the first locking state (FIGS. 16 and 19), similar to the first to third embodiments, even in the event that a human body such as an operator body, etc. bumps the handle 21 to close the movable door, alternatively, influence of the wind from the outside causes the movable door to be closed, the slide base 2B maintains the first locking state. Therefore, the actuator 20 will not protrude toward the switch body, thus preventing the actuator 20 from bumping an outside surface of the switch body and also from interfering with a human boy. As a result, a damage or breakage of parts of the safety switch can be prevented and a danger to the human body can be evaded. Also, the actuator 20 will not be transferred to the advance position and contacts inside the switch body will not be changed, thus securing a human's safety.

Then, by operating the key 22a from the first locking state shown in FIGS. 16 and 19, as shown in FIGS. 17 and 20, the rotation piece 22d of the lock 22 is rotated from the longitudinal position to the vertical position. Thereby, the notch 22d₁ at the distal end of the rotation piece 22d engages with the engaged portion (not shown) of the supporting shaft 2d of the knob 2D (FIG. 20), and thus the slide base 2B is locked in the second locking state relative to the fixed base 2A. At this juncture, the actuator 20 is kept in the retreat position.

In the second locking state (FIGS. 17 and 20), when the operator enters the hazardous area, he/she pulls out the key 22a from the lock 22 and takes it into the area. By so doing, even when another worker is going to close the movable door carelessly and holds the upper portion of the handle 21 with the knob 2D nipped by two fingers to pull the knob 2D, the notch 22d₁ of the rotation piece 22d is kept in engagement with the supporting shaft 2d of the knob 2D. Thereby, the distal end of the supporting shaft 2d will not be disengaged from the engagement hole 2e of the fixed base 2A and thus the first locking state is not unlocked. As a result, even when the movable door moves in the closing direction, a movement of the slide base 2B is blocked by the rotation piece 22d of the lock 22 and the slide base 2B cannot be moved. That is, the second locking state shown in FIGS. 17 and 20 is a state that unlocking by the unlocking means cannot be performed and the slide base 2B is caused to be unmovable relative to the fixed base 2A.

In such a fashion, since the second locking state is achieved by a key operation, the slide base 2B can be securely locked at the fixed base 2A in the second locking state.

Then, in closing the movable door, by operating the key 22a from the second locking state (FIGS. 17 and 20), the rotation piece 22d of the lock 22 is rotated from the vertical position to the longitudinal position, thus unlocking the second locking state to return to the first locking state (see FIGS. 16 and 19).

From this state, when the operator holds the upper portion of the handle 21 with the knob 2D nipped by the two fingers and pull the knob 2D, the distal end of the supporting shaft 2d disengages from the engagement hole 2e of the fixed base 2A and the first locking state is unlocked. Then, as the operator moves the slide base 2B forwardly (i.e. in the left direction of FIGS. 16 and 19), the actuator 20 is disposed at the advance position where the actuator 20 is in proximity to the switch body on the wall side (FIG. 15 and 18).

According to the above-mentioned embodiment, when the actuator 20 is transferred to the retreat position, the slide base 2B is locked in the first locking state, thereby facilitating locking of the slide base 2B in the first locking state. Moreover, the slide base 2B is locked in the second locking state through an operation of the key 22a, thereby allowing for securely locking the slide base 2B in the second locking state. Furthermore, at the time of opening of the movable door, since the actuator 20 is kept in the retreat position, a breakage or damage to the parts of the safety switch can be avoided.

### <Fifth Embodiment>

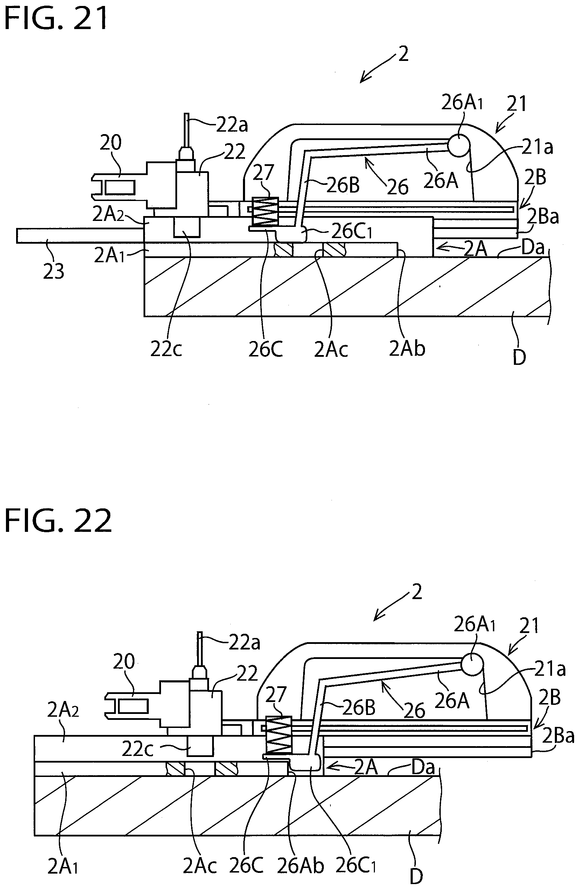

FIGS. 21 to 23 show an actuator unit according to a fifth embodiment of the present invention. In the drawings, like reference characters indicate identical or functionally similar elements to those in the first embodiment. Also, as with the first embodiment, a left-to-right direction in the drawings is referred to as a longitudinal direction of the actuator unit, and a direction perpendicular to the pages of the drawings is referred to as a vertical direction of the actuator unit.

In this fifth embodiment as well, similar to the first embodiment, the actuator unit 2 includes the operation bar unit 26 and the coil spring 27 imparting a spring force (or elastic resilience) to the third linear part 26C of the operation bar unit 26. By engaging the locking part 26C₁ of the third linear part 26C with the engagement hole 2Ab of the fixed base 2A, the first locking state is achieved (see FIG. 22). Also, when the operator holds the first linear part 26A of the operation bar unit 26 along with the handle 21 to move the third linear part 26C away from the fixed base 2A through the second linear part 26B of the operation bar unit 26, the locking part 26C₁ of the third linear part 26C disengages from the engagement hole 2Ab thus unlocking the first locking state.

Therefore, in the present embodiment as well, the locking part 26C₁ of the third linear part 26C and the coil spring 27 act as the first locking means that locks the slide base 2B in the first locking state, and the first to third linear parts 26A, 26B, 26C act as the unlocking means that unlocks the first locking state. Additionally, in the above-mentioned first embodiment, the locking part 26C₁ was disposed at the front end of the third linear part 26C, whereas in the present fifth embodiment, the locking part 26C₁ is disposed at the rear end of the third linear part 26C.

Also, in the present embodiment as well, the lock 22 functions as the second locking means that causes the slide base 2B to be in the second locking state where the slide base 2B is unmovable relative to the fixed base 2A, but the object that the operation member 22d of the lock 22 acts onto is different from that of the above-mentioned embodiment.

As shown in FIGS. 21 to 23, the fixed base 2A has an engagement hole 2Ac formed therein that the operation member 22d of the lock 22 is engageable with. The engagement hole 2Ac is disposed at a position that deviates from the longitudinal path when the locking part 26C₁ slides on the fixed base 2A.

Next, effects of the fifth embodiment will be explained.

As with the first embodiment, in the closing state of the movable door, the slide base 2B of the actuator unit 2 slide-moves ahead of the fixed base 2A, and the actuator 20 is disposed at the advance position in which the actuator 20 is in the vicinity of the switch body (see FIG. 21). From this state, in opening the movable door, the operator holds the upper portion of the handle 21 along with the first linear part 26A of the operation bar unit 26 to move the handle 21 rearwardly (i.e. in the right direction of FIG. 21). Then, the slide base 2B slide-moves rearwardly relative to the fixed base 2A and the actuator 20 is transferred to the retreat position that the actuator 20 is disposed away from the switch body.

At the retreat position, similar to the first embodiment, by the spring force of the coil spring 27, the third linear part 26C of the operation bar unit 26 moves toward the fixed base 2A, the locking part 26C₁ engages with the engagement hole 2Ab of the fixed base 2A, and the slide base 2B is locked in the first locking state relative to the fixed base 2A (see FIG. 22).

In this case as well, at the time of opening of the movable door, all that the operator has to do is to hold the handle 21 to move it in the opening direction of the movable door, thereby locking the slide base 2B in the first locking state relative to the fixed base 2A. At this time, since an extra operation from the outside such as a key operation and the like is not necessary, the slide base 2B can be easily locked in the first locking state.

In the first locking state (FIG. 22), similar to the first embodiment, even in the event that a human body such as an operator body, etc. bumps the handle 21 to close the movable door, alternatively, influence of the wind from the outside causes the movable door to be closed, the slide base 2B maintains the first locking state. Therefore, the actuator 20 will not protrude toward the switch body, thus preventing the actuator 20 from bumping an outside surface of the switch body and also from interfering with a human boy. As a result, a damage or breakage of parts of the safety switch can be prevented and a danger to the human body can be evaded. Also, the actuator 20 will not be transferred to the advance position and contacts inside the switch body will not be changed, thus securing a human's safety.

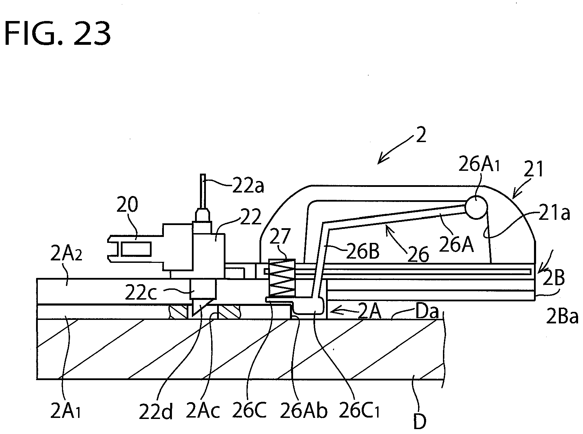

Then, by operating the key 22a from the first locking state shown in FIG. 22, as shown in FIG. 23, the operation member 22d of the lock 22 protrudes to engage with the engagement hole 2Ac and the slide base 2B is thus locked in the second locking state relative to the fixed base 2A. At this juncture, the actuator 20 is kept in the retreat position.

In the second locking state (FIG. 23), when the operator enters the hazardous area, he/she pulls out the key 22a from the lock 22 and takes it into the area. By so doing, when another worker is going to close the movable door carelessly and holds the upper portion of the handle 21 along with the first linear part 26A of the operation bar unit 26, the first linear part 26A rotates around the pivot 26A₁ against the spring force of the coil spring 27 and the third linear part 26C moves away from the fixed base 2A through the second linear part 26B. As a result, the locking part 26C₁ disengages from the engagement hole 2Ab of the fixed base 2A.

However, in this case as well, the operation member 22d of the lock 22 is kept in the engaged state with the engagement hole 2Ac and the second locking state is maintained. That is, the second locking state shown in FIG. 23 is a state in which even after the first locking state is unlocked by the unlocking means the slide base 2B is caused to be unmovable relative to the fixed base 2A.

In such a fashion, since the second locking state is achieved by a key operation, the slide base 2B can be securely locked at the fixed base in the second locking state.

Then, in closing the movable door, by operating the key 22a from the second locking state (FIG. 23), the operation member 22d of the lock 22 is retracted and disengaged from the engagement hole 2Ac (see FIG. 22), thus unlocking the second locking state to return to the first locking state.

From this state, the operator holds the upper portion of the handle 21 together with the first linear part 26A of the operation bar unit 26. Then, the first linear part 26A rotates around the pivot 26A₁ against the spring force of the coil spring 27, such that thereby the third linear part 26C and the locking part 26C₁ are moved away from the fixed base 2A through the second linear part 26B and thus the locking part 26C₁ disengages from the engagement hole 2Ab of the fixed base 2A.

When the operator moves the handle 21 forwardly (i.e. in the left direction of FIG. 22) holding the upper portion of the handle 21 along with the first linear part 26A of the operation bar unit 26, the slide base 2B slide-moves forwardly with the locking part 26C₁ sliding on the lower plate 2A₁, and the actuator 20 is disposed at the advance position where the actuator 20 is in proximity to the switch body on the wall side (see FIG. 21).

According to the above-mentioned embodiment, when the actuator 20 is transferred to the retreat position, the slide base 2B is locked in the first locking state, thereby facilitating locking of the slide base 2B in the first locking state. Moreover, the slide base 2B is locked in the second locking state through an operation of the key 22a, thereby allowing for securely locking the slide base 2B in the second locking state. Furthermore, at the time of opening of the movable door, since the actuator 20 is kept in the retreat position, a breakage or damage to the parts of the safety switch can be avoided.

The preferred embodiments of the present invention have been explained so far, but the application of the present invention is not restricted to those embodiments. The present invention includes various variants. Some of the variants will be given below:

### <First Variant>

In the first embodiment, an example was shown in which the operation member 22d of the lock 22 protrudes toward the locking part 26C₁ of the third linear part 26C of the operation bar unit 26 thereby locking the slide base 2B in the second locking state, but the application of the present invention is not limited to such an example.

The lock 22 may be the one like the lock 22 in the second embodiment. In this case, the rotation piece (or operation member) 22d rotatable by an operation of the key 22a is provided at the lock. Thereby, the rotation piece 22d can take a locking position in which the rotation piece 22d is transferred to an opposite position to the locking part 26C₁ so that the locking part 26C₁ restricts a movement away from the fixed base 2A to lock the slide base 2B in the second locking state and a unlocking position in which the rotation piece 22d is transferred to a position deviated from the opposite position to the locking part 26C₁ to unlock the second locking state.

### <Second Variant>

In the second embodiment, an example was shown in which the cap member 28A is fitted to one end of the coil spring 28 and in the retreat position (FIGS. 7 and 9) of the actuator 20 the cap member 28A disposed in the longitudinal position faces the rotation piece 22d of the lock 22, such that thereby in the retreat position the rotation piece 22d cannot move from the longitudinal position to the vertical position by an operation of the key 22a, but in the present invention, the coil spring 28 and the cap member 28A may be omitted.

### <Third Variant>

In the third embodiment, an example was shown in which as the cap member 29, a soft elastic member having a low modulus of elasticity to be easily elastically deformable was employed, but the cap member 29 may be formed of a hard elastic member having a high modulus of elasticity to be hardly elastically deformable. Also, in the third embodiment, the cap member 29 of a truncated pyramid-shape was taken for an example, but the shape of the cap member 29 was not limited to such a shape. Any suitable shape can be employed that has an inclined surface on a side opposite the inclined surface 24a of the proximal part 24 of the fixed base 2A.

<Fourth Variant>

In the fourth embodiment, an example was shown in which the lock 22 is disposed at the fixed base 2A and the engaged portion (that is, a notch of the supporting shaft 2d of the knob 2D) engageable with the rotation piece 22d of the lock 22 is disposed at the slide base 2B, but the application of the present invention is not limited to such an example.

The lock 22 may be disposed at the slide base 2B and in the retreat position of the actuator 20 the rotation piece 22d of the lock 22 may engage with the notch of the supporting shaft 2d of the knob 2D. Alternatively, the lock 22 may be disposed at the slide base 2B and there may be provided at the fixed base 2A an engaged portion that the rotation piece 22d of the lock 22 can engage with in the retreat position of the actuator 20.

### <Fifth Variant>

In the first and second embodiments, an example was shown in which the first to third linear parts 26A, 26B and 26C functioning as the unlocking means are formed integrally with the locking part 26C₁ acting as a part of the first locking means, but the locking part 26C₁ may be provided discretely from (i.e. as a separate member of) the third linear part 26C and there may be provided a connecting member (not shown) that interconnects the locking part 26C₁ with the third linear part 26C.

### <Sixth Variant>

In the first to fifth embodiments, an example was shown in which the second locking state is achieved by an operation of the key 22a, but the application of the present invention is not limited to such an example. In lieu of a mechanical key such as the key 22a, a detachable plug, a contactless card such as RFID (Radio Frequency Identification) card, and a contactless key using magnetism, light or the like may be used.

### <Seventh Variant>

In the first to fifth embodiments, an example was shown in which the safety switch 1 of the present invention is applied to a combination of the movable door D and the wall (or fixed door) W, but the application of the present invention is not limited to such an example. The present invention also has application to a combination of the movable doors, and the invention is applicable not only to a slide door but also to a rotary or pivoted door. Moreover, the safety switch of the present invention is also applicable to a contactless safety switch using magnetism, light or the like.

### <Other Applications>

In the above-mentioned embodiments and variants, the actuator unit of the present invention was applied to a safety switch, but application of the present invention is not restricted thereto. The present invention also has application to other switches such as a limit switch, and the like.

### INDUSTRIAL APPLICABILITY

The present invention is suitable for an actuator unit, and it is especially suitable for a structure in which the slide base can be not only locked easily relative to the fixed base but also made a secure locking state of the slide base relative to the fixed base by a key operation.

### DESCRIPTION OF REFERENCE NUMERALS

1: safety switch
2: actuator unit
2A: fixed base
2b: slide base
20: actuator
22: lock (or second locking means)
22a: key
22d: operation member
22C₁: locking part
27: coil spring
26C₁, 27: first locking mechanism (or first locking means)
26A: first linear part
26B: second linear part
26C: third linear part
26A, 26B, 26C: unlocking means
3: switch body (or switch)
D: movable door

## Claims

1. An actuator unit (2) for changing an output state of a switch (1), said actuator unit (2) comprising:
a fixed base (2A);
a slide base (2B) having an actuator (20) that acts on said switch (1) and provided slidable relative to said fixed base (2A) so that said actuator (20) can take an advance position in which said actuator (20) moves closely to said switch (1) and a retreat position in which said actuator (20) moves away from said switch (1);
a first locking means (26C₁, 27) that locks said slide base (2B) in a first locking state relative to said fixed base (2A) in said retreat position of said actuator (20) ;
an unlocking means (26A, 26B, 26C) that can unlock said first locking state by said first locking means (26C₁, 27); and
a second locking means (22) that is operatable from the outside in such a way as to cause said slide base (2B) to be unable to move relative to said fixed base (2A) in said retreat position of said actuator (20).

2. The actuator unit (2) according to claim 1, wherein said second locking means (22) includes an operation member (22d) that is operated by an operation from the outside and said operation member (22d) acts on said first locking means (26C₁, 27) .

3. The actuator unit (2) according to claim 1, wherein said second locking means (22) includes an operation member (22d) that is operated by an operation from the outside and said operation member (22d) acts on said fixed base (2A).

4. The actuator unit (2) according to claim 1, wherein said unlocking means (26A, 26B, 26C) is integrated with said first locking means (26C₁, 27) .

5. A safety switch (1) that includes said actuator unit (2) according to claim 1.
